Europäisches Patentamt

European Patent Office

Office européen des brevets

(19)

(11) Publication number: 0 340 786
A1

## (12) EUROPEAN PATENT APPLICATION

(21) Application number: 89108136.6

(22) Date of filing: 05.05.89

(51) Int. Cl.⁴: **C08K 5/00 , C08L 27/12 ,**
**//(C08K5/00,5:14,5:19,5:34)**

(30) Priority: 06.05.88 US 191219

(43) Date of publication of application:
08.11.89 Bulletin 89/45

(84) Designated Contracting States:
**DE FR GB IT NL**

(71) Applicant: **E.I. DU PONT DE NEMOURS AND**
**COMPANY**
**1007 Market Street**
**Wilmington Delaware 19898(US)**

(72) Inventor: **Tabb, David Leo**
**2802 Bexley Court**
**Wilmington Delaware 19808(US)**
Inventor: **Wilson, Janet Marie**
**2321 West 18th Street**
**Wlmington Delaware 19806(US)**

(74) Representative: **Abitz, Walter, Dr.-Ing. et al**
**Abitz, Morf, Gritschneder, Freiherr von**
**Wittgenstein Postfach 86 01 09**
**D-8000 München 86(DE)**

(54) Peroxide curable fluoroelastomer compositions containing a tetraalkylammonium halide and coagent.

(57) A peroxide curable elastomer composition comprising a fluoroelastomer whose interpolymerized units consist essentially of up to 3 mole % of a bromine containing olefin with the proviso that enough of such units are present to provide at least 0.05 weight percent bromine, at least 30 weight percent vinylidene fluoride units, and at least one fluorine-containing monomer that is copolymerizable with the bromine-containing olefin and vinylidene fluoride, contains 2-7 carbon atoms, no bromine atoms, and at least as many fluorine atoms as carbon atoms;
about 0.02-0.8 weight percent, based on the weight of the fluoroelastomer, of a tetraalkylammonium halide where each alkyl group contains 1-10 carbon atoms and the halide is a chloride, bromide or iodide;
about 0.5-10 weight percent, based on the weight of the fluoroelastomer, of an organic peroxide curing agent; and
about 1-15 weight percent, based on the weight of the fluoroelastomer, of a coagent that is a polyunsaturated compound which is capable of cooperating with the organic peroxide curing agent to cure the fluoroelastomer. These fluoroelastomer compositions form a strong adhesive bond with metal and resist separation from the metal.

# PEROXIDE CURABLE FLUOROELASTOMER COMPOSITIONS CONTAINING A TETRAALKYLAMMONIUM HALIDE AND COAGENT

## BACKGROUND OF THE INVENTION

This invention relates to peroxide-curable fluoroelastomer compositions which contain a tetraalkylammonium halide and coagent and have improved adhesion to metal when cured.

Peroxide cured compositions that are copolymers of vinylidene fluoride with other fluorinated monomers, such as hexafluoropropylene and, optionally, tetrafluoroethylene that also contain bromine cure sites have been used for a variety of applications, including shaft seals. Shaft seals contain, embedded within, a metal member that maintains the appropriate seal form. It is especially important that there be adequate high temperature adhesion of the fluoroelastomer to the metal so that newly formed parts can be removed from the mold without separation at the metal-polymer bond. Use of commercially available adhesives are unsatisfactory in promoting adhesion, and compound additives that generate strong metal adhesion during peroxide cure of fluoroelastomers are heretofore unknown. A major problem encountered with these fluoroelastomers is lack of adhesion to the metal insert when cured with peroxide.

## SUMARY OF THE INVENTION

The present invention is directed to a fluoroelastomer composition that has enhanced adhesion to metal when cured which comprises:

(a) a fluoroelastomer whose interpolymerized units consist essentially of up to 3 mole percent of a bromine-containing olefin with the proviso that enough of such units are present to provide at least 0.05 weight percent bromine, at least 30 weight percent vinylidene fluoride units, and at least one fluorine-containing monomer that is copolymerizable with the bromine-containing monomer and vinylidene fluoride, contains 2-7 carbon atoms, no bromine atoms, and at least as many fluorine atoms as carbon atoms;

(b) about 0.02-0.8 weight percent, based on the weight of the fluoroelastomer, of a tetraalkyl ammonium halide where each alkyl group contains 1-10 carbon atoms and the halide is a chloride, bromide or iodide;

(c) about 0.5-10 weight percent, based on the weight of the fluoroelastomer, of an organic peroxide curing agent; and

(d) about 1-15 weight percent, based on the weight of the fluoroelastomer, of a coagent that is a polyunsaturated compound which is capable of cooperating with the organic peroxide curing agent to cure the fluoroelastomer.

When the fluoroelastomer composition of the present invention is peroxide cured in the presence of a metal, e.g., steel, to form, for example, shaft seals, the fluoroelastomer forms a strong adhesive bond with the metal and resists separation from the metal.

## DETAILED DESCRIPTION OF THE INVENTION

The fluoroelastomers used in the present invention contain units derived from vinylidene fluoride. In addition to units of vinylidene fluoride, the fluoroelastomer copolymers contain units derived from at least one other fluorine-containing monomer copolymerizable with vinylidene fluoride and the bromine-containing olefin, said monomer being a compound which contains 2-7 carbon atoms, contains no bromine atoms, and contains at least as many fluorine atoms as carbon atoms. Representative monomers include hexafluoropropylene, pentafluoropropylene, tetrafluoroethylene and perfluoroalkyl perfluorovinyl ether where the alkyl group contains 1-5 carbon atoms. Preferred combinations of fluoroelastomers include units from any one of the following two combinations: (1) vinylidene fluoride and hexafluoropropylene or pentafluoropropylene and tetrafluoroethylene or (2) vinylidene fluoride, tetrafluoroethylene and perfluoromethyl perfluorovinyl ether. The fluoroelastomers that are generally used in this invention are fluoroelastomers containing at least about 30% by weight vinylidene fluoride units. Usually such fluoroelastomers contain about 30-60 weight percent vinylidene fluoride units, about 20-50 weight percent hexafluoropropylene units or pentafluoropropylene or perfluoromethyl perfluorovinyl ether units and about 3-35 weight percent tetrafluoroethylene units. The fluoroelastomers used in this invention also contain as cure sites units derived from a bromine-containing olefin. The term "bromine-containing olefin" as used herein means an olefin in which at least one hydrogen atom has been replaced with a bromine atom and optionally, one or more of the remaining hydrogen atoms have been replaced with an atom of another halogen, preferably fluorine. Some compounds of this type are available commercially and others can be prepared by methods known in the art, for example as shown by Tarrant and Tandon, J. Org. Chem 34 864 (1969) and by Fainberg and Miller, JACS 4170 (1957) and J. Org. Chem. 42 1985-90 (1977). Representative bromine-containing olefins which are copolymerizable with the monomers used to form the fluoroelastomers include bromotrifluoroethylene, 1-bromo-2,2-difluoroethylene, 4-bromo-3,3,4,4-tetrafluorobutene-1, vinyl bromide, 1-bromo-2,2-difluoroethylene, perfluoroallyl-bromide, 4-bromo-1,1,2-trifluorobutene, 4-bromo-1, 1,3,3,4,4-hexafluorobutene, 4-bromo-3-chloro-1,1,2,3,3-pentafluorobutene, 6-bromo-5,5,6,6-tetrafluorohexane, 4-bromo-perfluorobutene-1 and 3,3-difluoroallylbromide. It is preferable to use sufficient units of the brominated olefin to provide at least 0.05 weight percent bromine, usually about 0.2-1.5 weight percent bromine, in the fluoroelastomer copolymer. Bromine-containing fluoroelastomers used in the process of this invention are further described in U.S. Patent No. 4,214,060, the disclosure of which is incorporated herein by reference.

The fluoroelastomers of the present invention must contain as an adhesion promoter a tetraalkylammonium chloride, bromide or iodide wherein each member of the alkyl group contains 1-10 carbon atoms, preferably 3-6, most preferably 4. The amount of tetraalkylammonium halide that is added to the composition is from about 0.02-0.8 weight percent based on the weight of the fluoroelastomer, preferably 0.05-0.2 weight percent. When these small amounts of tetraalkylammonium halides are present in the bromine-containing fluoroelastomer compositions that are cured by organic peroxide systems containing a coagent to form, for example, a shaft seal, the fluoroelastomer composition adheres strongly to the metal component of the shaft seal.

The fluoroelastomer composition of the present invention must contain a coagent that is a polyunsaturated compound which is capable of cooperating with an organic peroxide curing agent to cure the fluoroelastomer. The coagent is added to the fluoroelastomer in an amount of about 1-15 weight percent, preferably 1-7 weight percent, based on the weight of the fluoroelastomer. Representative polyunsaturated compounds that function as coagents include triallyl cyanurate, triallyl isocyanurate, tris(diallylamine)-s-triazine, triallyl phosphite, N,N-diallyl acrylamide, hexaallyl phosphoramide, N,N,N′,N′-tetraallyl tetraphthalamide, N,N,N′,N′-tetraallyl malonamide, trivinyl isocyanurate, 2,4,5-trivinyl methyltrisiloxane, tri-(5-norbornene-2-methylene)cyanurate and the like. Triallyl isocyanurate is especially preferred.

An organic peroxide is used to cure the fluoroelastomer. The organic peroxide used will have a decomposition temperature higher than the mixing temperature employed in formulating the compositions. Preferably, the organic peroxide curing agent is a dialkyl peroxide. An organic peroxide curative is selected which will function as a curing agent for the composition in the presence of other ingredients which are present in the end-use fluoroelastomer composition and under the temperatures used in the curing operation without causing any harmful amount of curing during mixing or other operations which precede the curing operation. A dialkyl peroxide which decomposes at a temperature above about 100°C is especially preferred. In many cases one will prefer to use a di-tertiarybutyl peroxide having a tertiary carbon atom attached to a peroxy oxygen to cure the fluoroelastomer. Among the most useful peroxides of this type are

2,5-dimethyl-2,5-di(tertiarybutylperoxy)hexyne-3 and 2,5-dimethyl-2,5-di(tertiarybutylperoxy)hexane. Other representative peroxides that can be used include dicumyl peroxide, dibenzoyl peroxide, tertiary butyl perbenzoate, ethyl-3,3-di(t-butylperoxy)butyrate, 1,1-bis(t-butyl-peroxy)-3,3,5-trimethylcyclohexane and the like.

The peroxide curing agent can be added to the fluoroelastomer in amounts of from about 0.5-10% based on the weight of the fluoroelastomer. One will usually prefer to employ a peroxide in an amount of about 1.5-5% based on the weight of the fluoroelastomer.

Preferably, the fluoroelastomer compositions of this invention can also contain a metal compound that is a divalent metal oxide or hydroxide, such as magnesium oxide or hydroxide, zinc oxide or hydroxide, calcium oxide or hydroxide, or lead oxide or hydroxide; or mixtures of the oxide and/or hydroxide with a metal salt of a weak acid, for example, a mixture containing about 1-70 percent by weight of a metal salt. Among the useful metal salts of weak acids are barium-, sodium-, potassium-, lead-, and calcium-/-stearate, -benzoate, -carbonate, -oxalate, and -phosphite. The amount of divalent metal compound added generally is about 0.5-20 parts by weight per 100 parts of fluoroelastomer, about 2-15 parts being preferred. Metal compounds that are useful are further described in Bowman U.S. Patent 3,686,143.

3

The metal compound serves a dual purpose. It scavenges certain gaseous and acidic materials which are evolved during vulcanization and can chemically attack and weaken the fluoroelastomer. It also provides the fluoroelastomer with long term aging stability.

The fluoroelastomer compositions of the present invention are prepared by mixing the ingredients in a mixing apparatus known to be useful for preparing rubber or plastic compositions, for example, a roller-type mill or a Banbury mixer equipped to operate at a temperature below the decomposition temperature of the organic peroxide. The fluoroelastomer compositions containing the tetraalkylammonium halide, the peroxide curative and the coagent can be initially cured by heating the composition for about 1-60 minutes at about 150°-205°C in a conventional press, molds or extruder or the like. In order to obtain fluoroelastomers having maximum heat resistance and dimensional stability, a post-curing operation is conducted where the initially cured material is heated in an oven for an additional period of about 1-48 hours at 180°-300°C. The optimum curing time and conditions depends on the nature and proportion of ingredients and the properties needed for the final product. The fluoroelastomer compositions of this invention can, and generally do, contain one or more additives known to be useful for improving processing, properties or uses of the fluoroelastomer compositions. Processing aids such as tetramethylene sulfone, pigments such as titanium dioxide, and fillers such as clay or diatomaceous earth can be added in conventional amounts to the fluoroelastomer compositions.

The resulting fluoroelastomer compositions are especially useful for applications in which it is important that the fluoroelastomers adhere to metal. Perhaps, the most common use in which adhesion of fluoroelastomers to metal is most important is the manufacture of shaft seals in which a metal insert is embedded in the shaft seal.

In the determination of the physical properties of the samples described in the examples below, the following tests were employed: Mooney Scorch test corresponds to ASTM D-1646; ODR test (Oscillating Disk Rheometer, 12 min. cycle, 180°C, 1° arc) corresponds to ASTM D-2084; Hardness test corresponds to ASTM D-2240; Stress-strain properties test, including 100% secant modulus, tensile strength and elongation at break, corresponds to ASTM D-412; Compression Set test (o-rings with inside diameter of 0.289 cm. and a cross-sectional thickness of 0.055 cm.) corresponds to ASTM D-395.

For the measurement of adhesion, the following procedure was used. Strips of plain carbon steel, measuring 2.54 cm x 10.16 cm (1 in. x 4 in.), were roughened by sand blasting with 200 mesh alumina grit. After the metal strips were degreased, they were dipped in an organosilane primer dissolved in methanol (a 1/1 [v/v] "Chemlok" 607/methanol solution). The metal strips were air dried and then put into an air oven at 150°C for 30 minutes. A rubber strip was compression molded onto a primed metal strip at 190°C for 5 minutes. Adhesion was evaluated immediately upon removal from the press (results listed under "hot" in the data tables) and also at room temperature on the next day (results listed under "cold"). Adhesion was graded by attempting to remove the rubber from the steel strip. An adhesion rating of 1 indicates complete adhesive failure - no rubber is bonded to metal. A rating of 5 indicates a complete adhesive bond - all of the rubber is securely bonded to the metal.

Examples 1-4

A fluoroelastomer composition was prepared by adding to an internal mixer (B-Banbury) 1500 grams of a tetrapolymer of vinylidene fluoride, hexafluoropropylene, tetrafluoroethylene and 4-bromo-3,3,4,4-tetrafluorobutene-1 (51.0/28.5/20.5/0.7 by weight), 450 grams of MT carbon black, 45 grams litharge, 45 grams 2,5-dimethyl-2,5-di-(t-butylperoxy) hexane (45 wt. percent on diatomaceous earth), 45 grams of the coagent triallyl isocyanurate, 22.5 grams of the processing aid tetramethylene sulfone on diatomaceous earth, and 0.75 grams of the adhesion promoter tetrabutylammonium bromide (0.05 wt. percent based on weight of tetrapolymer). The compound was mixed until a chart temperature of 104°C (220°F) was reached (approximately 2.5 min.). Then the compound was discharged from the mixer and placed on a two-roll rubber mill on which was prepared the sheet stock that was used for obtaining the data in Table 1 below.

In a similar manner, the fluoroelastomer compositions of Examples 2-4 were prepared as described above in Example 1, except that 1.5 grams, 3.0 grams and 7.5 grams, respectively, of tetrabutylammonium bromide (0.1, 0.2 and 0.5 wt. percent, respectively, based on weight of the tetrapolymer) was substituted for 0.75 grams of tetrabutylammonium bromide. Samples were prepared for physical testing and evaluation of metal adhesion by the procedures described above. Data are given below in Table 1.

4

## Comparative Example 1

A control experiment was conducted as described in Example 1, but without addition of the metal adhesion promoter, tetrabutylammonium bromide. Test data are given in Table 1.

TABLE 1

| Example | 1 | 2 | 3 | 4 | Comparative Example 1 |
|---|---|---|---|---|---|
| Tetrabutylammonium bromide, wt percent based on elastomer | 0.05 | 0.1 | 0.2 | 0.5 | -- |
| Mooney Scorch | | | | | |
| Minimum (Mooney units) | 43 | 44 | 40 | 45 | 46 |
| Time to 5 pt. rise (min.) | 25 | 26 | 24 | 21 | 41 |
| Time to 10 pt. rise (min.) | 28 | 28 | 27 | 23 | -- |
| Oscillating Disk Rheometer (180° C; 1° arc) | | | | | |
| Minimum torque: Nm | 1.4 | 1.4 | 1.1 | 1.2 | 1.2 |
| Time to 2 pt. rise, min. | 1.2 | 1.1 | 1.0 | 1.1 | 1.4 |
| Time to 90% rise, min. | 4.0 | 4.0 | 4.0 | 4.0 | 3.4 |
| Maximum torque: Nm | 4.4 | 4.6 | 4.6 | 4.9 | 4.2 |
| Press Cure-190° C for 5 min. | | | | | |
| Post Cure-200° C for 24 hours | | | | | |
| Hardness, durometer A | 74 | 75 | 74 | 73 | 74 |
| Tensile Properties | | | | | |
| 100% Modulus, MPa | 7.2 | 8.7 | 6.8 | 7.8 | 5.8 |
| Tensile Strength, MPa | 14.7 | 16.6 | 18.6 | 16.8 | 18.6 |
| Elongation, percent | 160 | 160 | 185 | 160 | 210 |
| Compression Set, percent after 70 hrs./200° C | 29 | 35 | 32 | 34 | 38 |
| Adhesion Rating | | | | | |
| Hot | 2 | 3 | 4 | 4 | 1 |
| Cold | 2 | 2 | 4 | 4 | 1 |

The results show that the fluoroelastomer compositions have improved adhesion to metal while, at the same time, the fluoroelastomers show excellent physical properties.

## Examples 5-8

The procedure described above in Example 1 was substantially repeated, except that 0.75 grams (0.05 wt. percent), 1.5 grams (0.1 wt. percent), 3.0 grams (0.2 wt. percent) and 7.5 grams (0.5 wt. percent) of tetrabutylammonium iodide was used in the examples in place of the bromide.

Samples of the peroxide-cured fluoroelastomer compositions were evaluated with the results shown below in Table 2. Metal adhesion properties can be compared with those of Comparative Example 1, in Table 1.

TABLE 2

| Example | 5 | 6 | 7 | 8 |
|---|---|---|---|---|
| Tetrabutylammonium iodide, wt. percent based on elastomer | 0.05 | 0.1 | 0.2 | 0.5 |
| Mooney Scorch | | | | |
| Minimum (Mooney units)<br>Time to 5 pt. rise (min.)<br>Time to 10 pt. rise (min.) | 45<br>25<br>28 | 44<br>27<br>30 | 42<br>32<br>35 | 41<br>34<br>38 |
| Oscillating Disk Rheometer (180°C; 1° arc) | | | | |
| Minimum torque: Nm<br>Time to 0.2 pt. rise, min.<br>Time to 90% rise, min.<br>Maximum torque: Nm<br>Press Cure-190°C for 5 min.<br>Post Cure-200°C for 24 hours<br>Hardness, durometer A | 1.1<br>1.2<br>5.0<br>4.4<br><br><br>73 | 1.1<br>1.3<br>5.0<br>4.4<br><br><br>73 | 1.2<br>1.4<br>2.5<br>4.5<br><br><br>73 | 1.1<br>1.5<br>2.7<br>4.5<br><br><br>73 |
| Tensile Properties | | | | |
| 100% Modulus, MPa<br>Tensile Strength, MPa<br>Elongation, percent<br>Compression Set, percent after 70 hrs./200°C | 7.8<br>15.9<br>165<br>37.0 | 6.9<br>14.8<br>160<br>37.0 | 7.4<br>15.3<br>155<br>35.0 | 7.2<br>15.5<br>160<br>43.0 |
| Adhesion Rating | | | | |
| Hot<br>Cold | 4<br>4 | 4<br>5 | 5<br>5 | 5<br>4 |

Examples 9-11

The procedure described above in Example 1 was substantially repeated except that 0.1, 0.2 and 0.5 wt. percent (based on elastomer weight) of tetrabutylammonium chloride was substituted for tetrabutylammonium bromide. Physical properties and adhesion to metal were evaluated and data are given below in Table 3.

Comparative Example 2

A control experiment was conducted as described in Example 1, but without addition of the metal adhesion promoter, tetrabutylammonium chloride. Test data are included in Table 3.

TABLE 3

| Example | 9 | 10 | 11 | Comparative Example 2 |
|---|---|---|---|---|
| Tetrabutylammonium chloride wt. percent based on elastomer | 0.1 | 0.2 | 0.5 | -- |
| Mooney Scorch | | | | |
| Minimum (Mooney units) | 53 | 48 | 56 | 56 |
| Time to 5 pt. rise (min.) | 25 | 26 | 24 | 36 |
| Time to 10 pt. rise (min.) | 28 | 28 | 27 | 39 |
| Oscillating Disk Rheometer (177° C; 3° arc) | | | | |
| Minimum torque: Nm | 3.2 | 2.7 | 3.1 | 3.2 |
| Time to 0.2 pt. rise, (min.) | 1.1 | 1.1 | 1.1 | 1.2 |
| Time to 90% rise, (min) | 5.4 | 5.4 | 5.8 | 5.6 |
| Maximum torque: Nm | 11.2 | 10.8 | 11.5 | 10.5 |
| Press Cure-190° C for 5 min. | | | | |
| Post Cure-200° C for 24 hours | | | | |
| Hardness, durometer A | 70 | 68 | 69 | 69 |
| Tensile Properties | | | | |
| 100% Modulus, MPa | 7.4 | 7.2 | 8.7 | 7.7 |
| Tensile Strength, MPa | 15.1 | 19.9 | 18.4 | 18.0 |
| Elongation, percent | 165 | 190 | 170 | 170 |
| Compression Set, percent after 70 hrs./200° C | 32 | 30 | 30 | 36 |
| Adhesion Rating | | | | |
| Cold | 3 | 4 | 4 | 1 |

The fluoroelastomer compositions described in the working examples show enhanced adhesion to metal while, at the same time, they possess excellent physical properties.

## Claims

1. A peroxide curable elastomer composition comprising

   (a) a fluoroelastomer whose interpolymerized units consist essentially of up to 3 mole % of a bromine containing olefin with the proviso that enough of such units are present to provide at least 0.05 weight percent bromine, at least 30 weight percent vinylidene fluoride units, and at least one fluorine-containing monomer that is copolymerizable with the bromine-containing olefin and vinylidene fluoride, contains 2-7 carbon atoms, no bromine atoms, and at least as many fluorine atoms as carbon atoms;

   (b) about 0.02-0.8 weight percent based on the weight of the fluoroelastomer, of a tetraalkylammonium halide where each alkyl group contains 1-10 carbon atoms and the halide is a chloride, bromide or iodide;

   (c) about 0.5-10 weight percent, based on the weight of the fluoroelastomer, of an organic peroxide curing agent; and

   (d) about 1-15 weight percent, based on the weight of the fluoroelastomer, of a coagent that is a polyunsaturated compound which is capable of cooperating with the organic peroxide curing agent to cure the fluoroelastomer.

2. A fluoroelastomer composition of Claim 1 wherein the tetraalkylammonium halide is a bromide.

3. A fluoroelastomer composition of Claim 1 wherein the tetraalkylammonium halide is a chloride.

4. A fluoroelastomer composition of Claim 1 wherein the tetraalkylammonium halide is an iodide.

5. A fluoroelastomer composition of Claim 1 wherein the coagent is triallyl isocyanurate.

6. A fluoroelastomer composition of Claim 1 wherein bromine-containing olefin is 4-bromo-3,3,4,4-tetrafluorobutene-1.

7. A fluoroelastomer composition of Claim 1 wherein the fluorine-containing monomer is hexafluoropropylene.

8. A fluoroelastomer composition of Claim 1 wherein the fluorine-containing monomers are hexafluoropropylene and tetrafluoroethylene.

9. A fluoroelastomer composition of Claim 1 containing an acid acceptor that is a divalent metal oxide or hydroxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 211 431  (AUSIMONT S.p.A.)<br>* Claims *<br>--- | 1-9 | C 08 K    5/00<br>C 08 L   27/12 //<br>(C 08 K    5/00 |
| D,Y | US-A-4 214 060  (E.I. DU PONT DE NEMOURS AND CO.)<br>* Claims *<br>--- | 1-9 | C 08 K    5:14<br>C 08 K    5:19<br>C 08 K    5:34 ) |
| Y | EP-A-0 120 461  (MONTEDISON S.p.A.)<br>* Examples 40-42 *<br>----- | 1-9 | |

TECHNICAL FIELDS
SEARCHED (Int. Cl.4)

C 08 K
C 08 L

The present search report has been drawn up for all claims

| Place of search | Date of completion of the search | Examiner |
|---|---|---|
| THE HAGUE | 27-07-1989 | DE LOS ARCOS Y VELAZQUEZ |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)